# EUROPÄISCHE PATENTSCHRIFT

(11) **EP 2 034 252 B1**
(45) Veröffentlichungstag und Bekanntmachung des Hinweises auf die Patenterteilung: **11.11.2015**
(21) Anmeldenummer: 08015790.2
(22) Anmeldetag: 08.09.2008
(51) Int. Cl.: F24J 3/08, F28F 13/12

(54) **Erdsondenwärmekreislauf**
Geothermal heat exchanger circuit
Circuit d'échangeur d'énergie géothermique

(30) Priorität: 08.09.2007 DE 202007012636 U; 14.02.2008 DE 202008002048 U; 14.02.2008 DE 202008002034 U
(43) Veröffentlichungstag der Anmeldung: 11.03.2009
(60) Teilanmeldung: 15171317.9
(73) Patentinhaber: Dynamic Blue Holding GmbH, 82166 Gräfeling (DE)
(72) Erfinder: Ledwon, Anton, 53842 Troisdorf (DE)
(74) Vertreter: Kayser, Martin

(56) Entgegenhaltungen:
- EP-A1- 0 017 783
- WO-A1-03/060389
- WO-A1-2006/111655
- DE-A1- 19 953 072
- DE-U1- 20 013 561
- JP-A- 2004 340 463

## Beschreibung

Die Erfindung betrifft einen Erdsondenwärmekreislauf mit mindestens zwei Erdsonden, wobei die Erdsonden zum Austausch von Wärme zwischen einer Wärmeübertragungsflüssigkeit und Erdreich, in dem die Erdsonde im Betriebszustand angeordnet ist, mit einem Einströmrohr, das eine in das Einströmrohr weisende Einströmrohrinnenfläche und eine dem Erdreich zugewandte Einströmrohraußenfläche aufweist. Die Erdsondc weist weiterhin ein Ausströmrohr auf. Das Ausströmrohr weist eine in das Ausströmrohr weisende Ausströmrohrinnenfläche, die einen Ausströmrohrinnenraum einschließt, und eine außen von dem Ausströmrohr weg weisende Ausströmrohraußenfläche auf. Innerhalb des Einströmrohres ist ein Wärmeübertragungsraum. Der Wärmeübertragungsraum und der Ausströmraum sind in einem Verbindungsbereich, der an einem unteren Ende der Erdsonde angeordnet ist, fluidleitend verbunden. Die Erdsonde weist weiterhin einen mit dem Wärmeübertragungsraum fluidleitend verbundenen Zulauf auf, der an einem oberen Ende der Erdsonde angeordnet ist, und einen mit dem Ausströmrohrraum fluidleitend verbunden Ablauf, der ebenfalls an einem oberen Ende der Erdsonde angeordnet ist, wobei eine Wärmeübertragungsflüssigkeit durch das Einströmrohr und das Ausströmrohr geleitet werden kann und sich dabei der Wärmeaustausch zwischen der Wärmeübertragungsflüssigkeit und dem Erdreich zumindest durch das Einströmrohr hindurch vollzieht.

Es wird Bezug genommen auf die Gebrauchsmusterschriften DE 20 2007 012 636 U1, DE 20 2008 002 048 und DE 20 2008 002 034.

Erdsonden können koaxial oder U-förmig aufgebaut sein. U-förmige Erdsonden weisen ein Einströmrohr auf, das in das Erdreich hinabführt und an dem unteren Ende in einem Verbindungsbereich fluidleitend mit dem Ausströmrohr verbunden ist. Die Wärmeübertragungsflüssigkeit strömt also das Einströmrohr hinab, geht in dem Verbindungsbereich in das Ausströmrohr über und strömt die Erdsonde wieder hinauf. In koaxialen Erdsonden ist das Einströmrohr ein Sondenaußenrohr und das Ausströmrohr ein innerhalb des Einströmrohres angeordnetes Sondeninnenrohr. Außerhalb des Sondeninnenrohres und innerhalb des Sondenaußenrohres ist ein Ringbereich, der den Wärmeübertragungsbereich ausbildet. Die Anordnung des Sondenaußenrohres zum Sondeninnenrohr ist dabei koaxial. Der Verbindungsbereich ist bei einer koaxialen Erdsonde durch eine Öffnung des Sondeninnenrohres gebildet, so dass in dem Sondenaußenrohr bzw. im Ringbereich befindliche Wärmeübertragungsflüssigkeit hier in das Sondeninnenrohr fließen kann. Das Sondenaußenrohr entspricht der Außensonde in der DE 20 2008 002 048.

Beim Durchlaufen der Erdsonde findet eine Wärmeübertragung zwischen der Wärmeübertragungsflüssigkeit und dem Erdreich statt. Die Wärmeübertragung erfolgt im Wesentlichen durch Konvektion. Ob Wärme abgegeben wird oder aufgenommen wird hängt davon ab, ob die Erdsonde für einen Kälteprozess oder einem Wärmeprozess verwendet wird. Dazu werden gattungsgemäße Erdsonden bis zu 100 m tief im Erdreich angeordnet.

Üblicherweise werden mehrere Erdsonden in einem Erdsondenwärmekreislauf verwendet. Der Erdsondenwärmekreislauf weist üblicherweise eine Pumpe und einen Wärmetauscher auf. Mittels der Pumpe wird Wärmeübertragungsflüssigkeit zur Zirkulation innerhalb des Erdsondenwärmekreislaufes gebracht. Die Erdsonden können dabei parallel oder in Reihe oder in Kombinationen daraus geschaltet sein. In dem Wärmetauscher wird die gewonnene Temperaturdifferenz zwischen der zu- und der abgeleiteten Wärmeübertragungsflüssigkeit an einen zweiten Fluidkreislauf übertragen.

Der Temperaturunterschied zwischen in eine Erdsonde eingeleiteter und abgeleiteter Wärmeübertragungsflüssigkeit wird im Folgenden an Stellen, in denen es für das Verständnis der jeweiligen Aussage förderlich ist, abkürzend als Temperaturgradient bezeichnet. Der Erde wird ein Wärmestrom oder eine Wärmeleistung entnommen.

Wird an dem Zulauf Wärmeübertragungsflüssigkeit in die Erdsonde eingeleitet, so wird in der Regel durch Druckbeaufschlagung die Wärmeübertragungsflüssigkeit gezwungen, die gesamte Länge einer Erdsonde zweimal zu durchlaufen. Die Menge an durch die Erdsonde geleiteter Wärmeübertragungsflüssigkeit pro Zeit wird als Volumenstrom bezeichnet. In dem unteren Ende der Erdsonde wird die Wärmeübertragungsflüssigkeit durch das Sondeninnenrohr wieder nach oben abgeleitet und kann an einem Ablauf entnommen werden. Es versteht sich, dass das Sondeninnenrohr auch mit dem Zulauf- und das Sondenaußenrohr auch mit dem Ablauf verbunden sein können.

Bei Erdsonden von weniger als 100 m Länge bzw. Tiefe beträgt der Temperaturunterschied zwischen der eingeleiteten Wärmeübertragungsflüssigkeit und der abgeleiteten Wärmeübertragungsflüssigkeit in der Regel wenige Kelvin. Üblich sind Eingangswerte zwischen -2 °C und 1 °C und Ausgangswerte zwischen 2 °C und 5 °C. Man erkennt, dass die Temperaturdifferenz verhältnismäßig gering ist und sich die aus den Erdsonden austretende Wärmeübertragungsflüssigkeit noch nicht z.B. zum Heizen von Wohnräumen eignet. Es wird dem Erdreich zwar eine Wärmeleistung entnommen, diese kann jedoch so noch nicht zum Beheizen eines Wohnraumes genutzt werden, denn die aus dem Erdreich abgeführte Wärmeübertragungsflüssigkeit ist dazu zu kalt.

Die Wärmeleistung kann jedoch mit Hilfe einer Wärmepumpe nutzbar gemacht werden. In einer Wärmepumpe wird eine zugeführte Wärmeleistung auf einem niedrigen Temperaturniveau genutzt, um ein Wärmemittel, das in dem zweiten Fluidkreislauf befindlich ist, in einem Verdampfer zu verdampfen. Der Verdampfer ist in diesem Fall ein Bauteil, in dem die aus den Erdsonden gewonnene Wärme auf einem niedrigem Temperaturniveau der Wärmepumpe zugeführt wird. Dazu durchströmt die aus den Erdsonden abgeleitete Wärmeübertragungsflüssigkeit den Wärmetauscher und gibt ihre Wärme an den zweiten Fluidkreislauf ab. Alsdann wird das Wärmemittel einer Pumpe zugeführt, welche das nun gasförmige Wärmemittel komprimiert und es somit auf ein höheres Druckniveau bringt. Dabei erwärmt sich das gasförmige Wärmemittel und eben diese Wärme kann zur Aufheizung eines Wohnraumes genutzt werden. Bei der Abgabe seiner Wärme an den Wohnraum erkaltet und kondensiert das Wärmemittel. In einer Drossel wird der Druck wieder auf das niedrigere Druckniveau entspannt. Es wird nun wieder dem Verdampfer der Wärmepumpe zugeführt und es wird somit ein Wärmepumpenkreislauf bereitgestellt. Es gibt jedoch noch andere Arten von Wärmepumpen, die nicht wie oben beschrieben funktionieren. Diese sind dem Fachmann wohlbekannt. Auf die Wärmeübertragungsflüssigkeit in den Erdsonden kann verzichtet werden, wenn das Wärmemittel selbst durch die Erdsonden zirkuliert.

Üblicherweise kommen in einem Erdsondenwärmekreislauf, wie beispielsweise aus der WO 2006/111655 A1 bekannt, mehrere Erdsonden zum Einsatz, da der nutzbare Temperaturunterschied einer Erdsonde in der Regel nicht ausreicht, um das Wärmemittel in dem zweiten Fluidkreislauf zu verdampfen. Auch wenn sich Erdsonden zur Aufnahme von Wärme aus dem Erdreich gut eignen, um in den Prozess einer Wärmepumpe eingebunden zu werden, so besteht dennoch der Wunsch, den erzielbaren Temperaturgradienten bei gängigen Erdsonden zu erhöhen. Insbesondere bei Erdsonden mit einer Länge von unter 70 m ist der erzielbare Temperaturgradient häufig unzureichend. Weiterhin ist in einigen Regionen die zulässige Bohrtiefe begrenzt, um beispielsweise das Grundwasser zu schützen. In diesen Regionen ist der Einsatz von Erdsonden, die erst ab einer Tiefe von 70 m effektiv arbeiten, nicht sinnvoll.

Hier setzt nun die Erfindung ein. Sie hat es sich zur Aufgabe gemacht, die Effizienz von Erdsondenwärmekreisläufen zu verbessern.

Die Aufgabe wird gelöst mit einem Erdsondenwärmekreislauf gemäß Patentanspruch 1. Eine vorteilhafte Ausgestaltung der Erfindung ist Gegenstand des abhängigen Anspruchs. Die Beschreibung, insbesondere im Zusammenhang mit den Figuren, charakterisiert und spezifiziert die Erfindung zusätzlich.

Ein erfindungsgemäß ausgestaltete Erdsondenkreislauf weist mindestens zwei Erdsonden auf, die jeweils ein Mittel zur Verwirbelung der Wärmeübertragungsflüssigkeit aufweisen, das in dem Wärmeübertragungsraum angeordnet ist.

Das Mittel zur Verwirbelung der Wärmeübertragungsflüssigkeit bewirkt, dass sich in dem Ringbereich zumindest teilweise eine turbulente Strömung ausbildet. Überraschenderweise hat sich gezeigt, dass sich bei einer Erhöhung des durch eine Erdsonde geleiteten Volumenstroms der Temperaturgradient ebenfalls erhöht. Dies war im Stand der Technik nicht der Fall. Eine Erhöhung des Volumenstroms führte üblicherweise zu einer geringeren Temperaturdifferenz zwischen der eintretenden und der austretenden Wärmeübertragungsflüssigkeit. Man hielt im Stand der Technik das Maximum an Wärme, die man mit Erdsonden dem Erdreich entziehen kann, bereits für erreicht. Die im Stand der Technik übliche Lösung zur Steigerung des Temperaturgradienten war es, eine tiefere Bohrung und eine längere Erdsonde vorzusehen.

Durch das Vorsehen eines Mittels zur Verwirbelung der Wärmeübertragungsflüssigkeit kann die notwendige Länge einer Erdsonde, die erforderlich ist, damit die Erdsonde einen ausreichend großen Wirkungsgrad hat, reduziert werden und die Erdsonde kann in Regionen eingesetzt werden, in denen die Bohrtiefe gesetzlich begrenzet ist. Der Wirkungsgrad wird verbessert, indem der Temperaturunterschied zwischen ein- und abgeleiteter Wärmeübertragungsflüssigkeit pro Menge an Wärmeübertragungsflüssigkeit während eines Durchlaufes durch die Erdsonde erhöht wird.

Als Wärmeübertragungsflüssigkeit wird üblicherweise Wasser verwendet. Da insbesondere in den kalten Wintermonaten auch Temperaturen unterhalb des Nullpunktes auftreten können, wird üblicherweise ein Frostschutz zugesetzt. Bedingt u.a. durch die Anomalie des Wassers ändern sich die Stoffeigenschaften des Wassers mit der Temperatur. So ist z.B. die Dichte von Wasser bei 4°C über Null am höchsten. Die Änderung der Stoffeigenschaften des Wassers führt in Erdsonden, in denen keine Mittel zur Verwirbelung von Wärmeübertragungsflüssigkeit angeordnet sind, dazu, dass sich eine laminare Strömung mit ungleich temperierten Schichten ausbildet. Die ungleich temperierten Schichten verlaufen parallel zur Einströmrohraußenfläche. In der Nähe der Einströmrohrinnenfläche liegen wärmere Schichten vor, die sich schlecht mit den weiter innen liegenden Schichten vermengen. Die Wärmeübertragungsflüssigkeit wirkt selbst als Isolator. Dies ist angesichts der erheblichen Länge gängiger Erdsonden verwunderlich, da es in anderen technischen Gebieten eher schwer zu verhindern ist, dass eine Strömung turbulent wird, so dass davon ausgegangen werden musste, dass die Durchmengung in einer Erdsonde aus dem Stand der Technik ausreichend gut ist.

Im Stand der Technik sprachen neben dem oben genannten noch weitere Argumente gegen den Einsatz von Mitteln zur Verwirbelung der Wärmeübertragungsflüssigkeit in Erdsonden. Beispielsweise führt eine turbulente Strömung in einer Flüssigkeit zu einer sehr hohen Reibung und somit zu einem hohen Strömungswiderstand. Ein hoher Strömungswiderstand bringt nachteilig mit sich, dass zur Förderung der Wärmcübertragungsflüssigkeit notwendige Druckunterschied vor und nach der Erdsonde groß sein muss, erst recht bei einer Rohrlänge des Sondenaußenrohres von über 20 m. Man ging also davon aus, dass eine Förderpumpe eine verhältnismäßig hohe Leistung aufbringen muss, um den Druckunterschied vor und nach der Erdsonde bereitzustellen. Der Druckunterschied ist notwendig, um einen Volumenstrom an Wärmeübertragungsflüssigkeit durch die Erdsonde zu fördern. Dem Erfinder fiel zufällig auf, dass der notwendige Druckunterschied nicht groß ist. Um beispielsweise drei hintereinander geschaltete Erdsonden mit 10 bis 14 Kubikmeter Wasser die Stunde zu durchfluten, reicht ein Druckunterschied von 0,1 bar bis 0,3 bar, so dass eine Pumpe lediglich 100 W bis 300 W an Leistung aufnehmen muss, um den Druckunterschied bereitzustellen.

Das Mittel zur Verwirbelung der Wärmeübertragungsflüssigkeit ist durch einen Verwirbelungsflügel gebildet. Mit einem Verwirbelungsflügel ist ein schraubenartig ausgebildetes flächiges Element gemeint, das sich nach Art einer Helix um das Sondeninnenrohr erstreckt. Üblicherweise wird bei der Montage einer Erdsonde zunächst das Sondenaußenrohr in einen vorgebohrten Schacht eingebracht, bevor das Sondeninnenrohr eingesetzt wird. Vorteilhafterweise wird deshalb der Verwirbelungsflügel mit dem Sondeninnenrohr verbunden. Gemäß einer vorteilhaften Weiterbildung der Erfindung werden mehrere Mittel zur Verwirbelung der Wärmeübertragungsflüssigkeit in dem Ringraum angeordnet, also dementsprechend mehrere Verwirbelungsflügel.

Die Verwirbelungsflügel sind um eine nach Art eines zylindrischen Rohrabschnittes ausgebildeten Manschette angeordnet, in der eine Bohrung mit einem Innengewinde vorgesehen ist. Die Manschette korrespondiert an einer nach innen weisenden Fläche zu der Form des Sondeninnenrohres und ist auf diesem für die Montage verschiebbar angeordnet. Die Manschette kann dabei in Richtung entlang einer Längsachse des Sondeninnenrohres bzw. der Erdsonde verschoben werden, um das Mittel zur Verwirbelung der Wärmeübertragungsflüssigkeit entlang dem Sondeninnenrohr zu positionieren. Die Längsachse verläuft im Wesentlichen parallel zu dem Sondeninnenrohr bzw. Dem Sondenaußenrohr. Durch das Innengewinde kann eine Schraube eingesetzt werden, z.B. eine Madenschraube, um die Manschette mit dem daran angeordneten Mittel zur Verwirbelung der Wärmeübertragungsflüssigkeit verrutschsicher mit dem Sondeninnenrohr zu verbinden.

In einer vorteilhaften Ausgestaltung der Erfindung weist der Verwirbelungsflügel sich von diesem weg erstreckende Stopper auf, welche die Ausbildung einer turbulenten Strömung in der Wärmeübertragungsflüssigkeit begünstigen.

Gemäß einer weiteren vorteilhaften Weiterbildung der Erfindung sind die Mittel zur Verwirbelung der Wärmeübertragungsflüssigkeit abschnittsweise auf dem Sondeninnenrohr angeordnet. Dazwischen sind Abschnitte, in denen keine Mittel zur Verwirbelung der Wärmeübertragungsflüssigkeit angeordnet sind. Vorteilhafterweise sind die Abschnitte, in denen keine Mittel zur Verwirbelung der Wärmeübertragungsflüssigkeit angeordnet sind, länger als die Abschnitte, in denen Mittel zur Verwirbelung der Wärmeübertragungsflüssigkeit angeordnet sind. Dies ist einerseits ressourcenschonend, andererseits hat sich gezeigt, dass eine abschnittsweise Anordnung der Mittel zur Verwirbelung der Wärmeübertragungsflüssigkeit ausreicht, um auch hinter einem Mittel zur Verwirbelung der Wärmeübertragungsflüssigkeit die Strömung der Wärmeübertragungsflüssigkeit teilweise turbulent zu halten.

Gemäß einer vorteilhaften Weiterbildung der Erfindung sind die Abschnitte der Erdsonde zwischen den Mittel zur Verwirbelung der Wärmeübertragungsflüssigkeit glatt ausgebildet. Durch ein Mittel zur Verwirbelung der Wärmeübertragungsflüssigkeit eines vorhergehenden Abschnittes ist die Strömung der Wärmeübertragungsflüssigkeit auch in diesem glatten Abschnitt immer noch teilweise turbulent.

Das Sondeninnenrohr weist einen Durchmesser di und das Sondenaußenrohr einen Durchmesser da auf, gemessen an den jeweiligen inneren Durchmessern. Vorteilhaft liegt das Verhältnis di zu da in einem Bereich zwischen 0,2 und 0,7. Besonders vorteilhaft liegt das Verhältnis zwischen di und da in einem Bereich zwischen 0,25 und 0,35. Dadurch wird erreicht, dass der Ringraum eine größere Fläche hat als der Ausströmrohrinnenraum innerhalb des Sondeninnenrohrs. Dadurch ist die Fließgesutiwindigkeit in dem Ausströmrohrinnenraum größer als innerhalb des Ringraumes, in dem die Wärmeübertragung stattfindet. Die Wärmeübertragungsflüssigkeit strömt also mit einer verhältnismäßig langsamen Geschwindigkeit durch den Ringraum und ist für einen relativ Zeitabschnitt in dem Ringraum mit dem Sondenaußenrohr in Kontakt. Innerhalb des Sondeninnenrohres ist die Geschwindigkeit der Wärmeübertragungsflüssigkeit möglichst groß, damit sich die emporsteigende Wärmeübertragungsflüssigkeit nicht an der zugeleiteten, noch kalten Wärmeübertragungsflüssigkeit im oberen Abschnitt der Erdsonde abkühlt. Dadurch wird die Effizienz einer Erdsonde weiter verbessert.

Gemäß einer weiteren vorteilhaften Ausgestaltung der Erfindung ist das Sondeninnenrohr thermisch isoliert. Die Isolation kann dabei über nach dem Stand der Technik vorbekannte Mittel bereitgestellt werden. Beispielsweise kann das Sondeninnenrohr doppelwandig sein, es kann jedoch auch aus einem Material mit einem verhältnismäßig geringen Wärmeübertragungskoeffizienten hergestellt sein. Die Isolation des Innenrohres bewirkt, dass sich in der Erdsonde emporsteigende Wärmeübertragungsflüssigkeit nicht an der im Ringraum befindlichen Wärmeübertragungsflüssigkeit abkühlt.

Die Erdsonden weisen einen Anschlussdeckel auf, in dem der Zulauf fluidleitend mit dem Ringraum und der Ablauf fluidleitend mit dem Sondeninnenrohr verbunden wird. Der Anschlussdeckel bildet also so eine Art Schnittstelle zwischen dem Teil der Erdsonde, der in dem Erdreich steckt und dem Teil, der von außen zugänglich sein muss. Vorteilhafterweise weisen sowohl der Zulauf als auch der Ablauf Mittel zur Befestigung von Leitungen für Wärmeübertragungsflüssigkeit auf. In einer sehr einfachen Ausgestaltung ist der Anschlussdeckel auf das Sondenaußenrohr gesteckt und bildet weiter einen Ringraum aus.

Mehrere Erdsonden werden verwendet, um die dem Boden entziehbare Wärmeleistung zu erhöhen. Im Stand der Technik sind zwei Schaltungsmöglichkeiten bekannt. In der so genannten Tichelmann-Schaltung, werden mehrere Erdsonden parallel betrieben. Das bedeutet, dass ein diskretes Volumen Wärmeübertragungsflüssigkeit, z.B. ein gedachter Liter, an einer T-Leitung aufspaltet in drei gleichgroße Anteile, die jeweils eine Erdsonde durchlaufen und hinterher wieder zusammengeführt werden. Dabei erwärmt sich die Wärmeübertragungsflüssigkeit. Nachteilig ist, dass bei der Tichelmann-Schaltung, dass die Verweildauer des gedachten Liters bei einem Durchlauf durch die parallel geschalteten Erdsonden kürzer ist als beispielsweise bei einer Reihenschaltung.

Der erfindungsgemäß ausgestaltete Erdwärmekreislauf verwendet eine Reihenschaltung (Ledwon-Schaltung). In einer Reihenschaltung durchläuft ein diskretes Volumen an Wärmeübertragungsflüssigkeit jede Erdsonde hintereinander. Die Dauer, die jedes diskrete Volumen an Wärmeübertragungsflüssigkeit, z.B. der gedachte eine Liter in einer Erdsonde verbringt, ist bezogen auf den Volumenstrom dreimal so lang wie in der Tichelmann-Schaltung, weil der gedachte eine Liter durch jede Erdsonde hintereinander fließt. Die Verweildauer der Wärmeübertragungsflüssigkeit in dem Ringraum der Erdsonde sollte möglichst lang sein, da der Temperaturunterschied zwischen dem Erdreich und der Wärmeübertragungsflüssigkeit verhältnismäßig gering ist und die Wärmeübertragung Infolgedessen nicht sehr schnell abläuft. Dem steht ein geringerer Strömungswiderstand der Erdsonden in der Tichelmann-Schaltung gegenüber.

Den vorhergehenden Ausführungen ist zu entnehmen, dass der gleiche Volumenstrom an Wärmeübertragungsflüssigkeit in der die Parallelschaltung (Tichelmann-Schaltung) weniger Wärme aufnimmt als in der Reihenschaltung (Ledwon-Schaltung), zur Förderung des gleichen Volumenstromes jedoch eine geringere Pumpenleistung notwendig ist.

Indem erfindungsgemäßen Erdsondenwärmekreislauf mit mehreren Erdsonden weist jeder Anschlussdeckel einer Erdsonde eine Entlüftung auf. Eine Entlüftung sieht eine Entlüftungsöffnung vor, die in eine Entlüftungsleitung mündet. Die Entlüftungsleitung weist ein Entlüftungsventil auf, über das in einem fluidführenden oder fluidleitenden Bauteil vorhandene Luft abgeführt werden kann. Unter fluidleitenden oder fluidführenden Bauteilen sind die Bauteile gemeint, in denen im Betrieb Wärmeübertragungsflüssigkeit angeordnet ist oder welche diese leiten. Auch ist an dem Zulauf eine Entlüftungsöffnung mit einer Entlüftungsleitung und einem Entlüftungsventil vorgesehen.

In einer sehr einfachen Ausführungsvariante ist das Entlüftungsventil ein Schraubverschluss, der auch gleichzeitig das Sondenaußenrohr mit Wärmeübertragungsflüssigkeit gefüllt wird. Über die Entlüftungsöffnung kann Luft zumindest aus dem Sondenaußenrohr abgeführt werden. Die Luft in dem Sondeninnenrohr wird z.B. bei einer Reihenschaltung mehrerer Erdsonden in das Sondenaußenrohr der nächsten Erdsonde überführt.

Vorteilhaft ist die Entlüftungsöffnung, die zu der Entlüftungsleitung mündet, am geodätisch höchsten Punkt des Anschlussdeckels angeordnet. Der Anschlussdeckel sollte dabei so gestaltet sein, dass die Wärmeübertragungsflüssigkeit beim Emporsteigen während der Entlüftung den Anschlussdeckel ausfüllt und keine Luftrückstände in dem Anschlussdeckel verbleiben.

Die Wärmeübertragungsflüssigkeit wird mittels einer Pumpe durch die Erdsonde bzw. Erdsonden und schließlich durch den Verdampfer der Wärmepumpe geleitet. Für die Förderung ist also ein gewisser Überdruck von ca. 0,1 bis 0,5 bar erforderlich. Dieser Druck kann genutzt werden, um die Erdsonden zu entlüften. Vorteilhaft ist das Entlüftungsventil nicht unmittelbar in der Erdsonde, sondern einige Meter davon beabstandet und geodätisch etwas höher angeordnet. Über eine als dünne Rohrleitung ausgebildete Entlüftungsleitung ist die Entlüftungsöffnung mit dem Anschlussdeckel verbunden. In einer komfortableren Ausgestaltung ist das Entlüftungsventil innerhalb eines Wohnraumes angeordnet und kann von diesem aus bedient werden. Um die Erdsonde zu entlüften, hat der Anwender lediglich das Entlüftungsventil zu öffnen und solange geöffnet zu halten, bis keine Luft mehr entweicht.

Gemäß einer vorteilhaften Weiterbildung der Erfindung weist der Anschlussdeckel eine Ausnehmung auf, in welche das Sondeninnenrohr bündig hineinpasst. Zur Montage wird der Anschlussdeckel auf das Sondenaußenrohr gestülpt. Vorteilhaft werden hier noch Dichtungen vorgesehen, um den Verbund aus Sondenaußenrohr und Anschlussdeckel wasserdicht gegen die Umgebung zu versiegeln.

Gemäß einer vorteilhaften Weiterbildung der Erfindung weist der Anschlussdeckel in dem Bereich, in dem er auf das Sondenaußenrohr gestülpt wird, Heizwendeln auf. Die Heizwendel kann ein elektrischer Draht sein, der an zwei Anschlussstellen durch den Anschlussdeckel nach außen tritt. An den Anschlussstellen kann ein elektrischer Strom angelegt werden, um das Material des Anschlussdeckels, üblicherweise Kunststoff, zum Aufschmelzen zu bringen. Durch dieses Aufschmelzen kann der Anschlussdeckel mit dem Sondenaußenrohr sogar wasserdicht verbunden werden.

Gemäß einer vorteilhaften Weiterbildung ist die Isolation des Innenrohres nur abschnittsweise, beispielsweise innerhalb des oberen Abschnitts angeordnet. Hierdurch kann Material eingespart werden, zudem ist im unteren Bereich der Erdsonde der Temperaturunterschied zwischen der einströmenden Wärmeübertragungsflüssigkeit und der ausströmenden Wärmeübertragungsflüssigkeit nicht mehr so hoch wie im oberen Bereich der Erdsonde.

Vorteilhaft ist an dem im Erdreich steckenden unteren Ende der Erdsonde ein Sondenfuß angeordnet. Der Sondenfuß dichtet die Erdsonde gegen die Umgebung ab. Er ist so gestaltet, dass die Erdsonde während des Absenkens in ein vorgebohrtes Loch an dieser besonders kritischen Stelle nicht undicht wird. Dazu ist der Sondenfuß vorteilhafterweise kegelig spitz ausgeführt. Vorteilhafterweise kann der Sondenfuß auf das Ende dem Sondenaußenrohr aufgestülpt oder hineingestülpt werden und mit diesem flüssigkeitsdicht verbunden werden.

Weitere Vorteile und Merkmale der Erfindung werden in der nun folgenden Figurenbeschreibung beschrieben. In dieser zeigen:
- Fig. 1:: eine schematische Darstellung einer Erdsonde mit einem Anschlussdeckel, einem Sondeninnenrohr und einem Sondenaußenrohr, wobei um das Sondeninnenrohr Mittel zur Verwirbelung der Wärmeübertragungsflüssigkeit angeordnet sind,
- Fig. 2:: eine schematische Darstellung eines Erdsondenwärmekreislaufes mit mehreren Erdsonden, die in Reihe geschaltet sind,
- Fig. 3: die Darstellung eines Erdsondenwärmekreislaufes aus Figur 2 in einer Seitenansicht mit in Erdreich angeordneten Erdsonden, die über Leitungen mit einem Wärmetauscher und einer Pumpe verbunden sind, wobei die Erdsonden in Reihe geschaltet sind,
- Fig. 4: die schematische Darstellung eines nicht erfindungsgemäßen Erdsondenwärmekreislaufes in einer Draufsicht mit Erdsonden, die über Leitungen mit einem Wärmetauscher und einer Pumpe verbunden sind, wobei die Erdsonden parallel geschaltet sind, und
- Fig. 5: die schematische Darstellung eines nicht erfindungsgemäßen Erdsondenwärmekreislaufes in einer Draufsicht mit einer Verteilerbatterie, in der die zur Speisung dreier Erdsonden notwendige Leitungen zusammenlaufen.

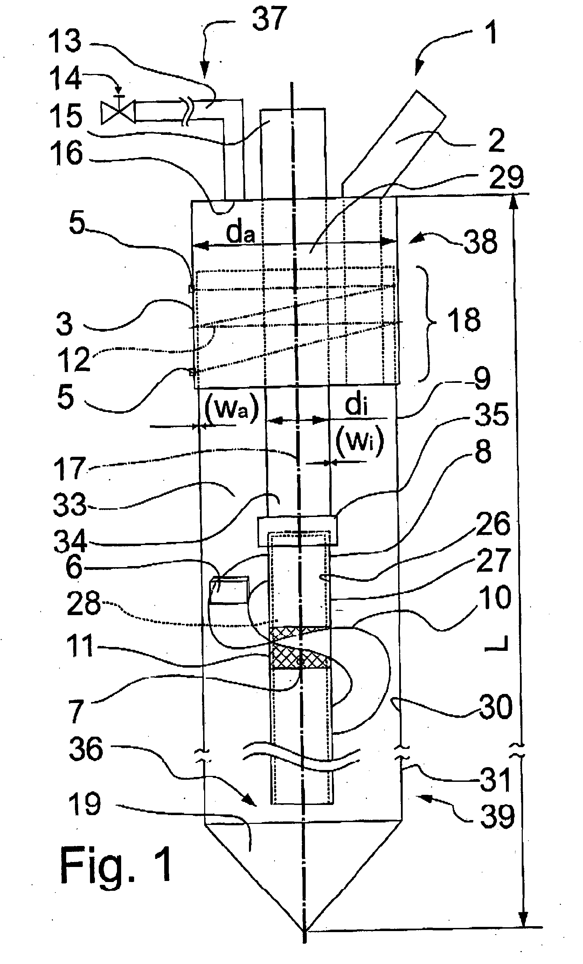

Figur 1 zeigt eine schematische Darstellung einer Erdsonde 1. Über einen Zulauf 2 wird Wärmeübertragungsflüssigkeit in ein Sondenaußenrohr 9 geleitet. Das Sondenaußenrohr 9 ist ein zylindrisches Bauteil mit dem inneren Durchmesser da, gemessen an der Einströmrohrinnenfläche 30. Außen weist das Sondenaußenrohr die Einströmrohraußenfläche 31 auf, die zum Erdreich 25 weist. Konzentrisch zu dem Sondenaußenrohr 9 ist innerhalb desselben ein Sondeninnenrohr 8 angeordnet. Es ist im Wesentlichen zylindrisch und weist an seiner nach innen weisenden Fläche eine Ausströmrohrinnenfläche 26 und an seiner nach außen weisenden Fläche eine Ausströmrohraußenfläche 27 auf. Die Wärmeübertragungsflüssigkeit strömt innerhalb eines Ringraumes 33 die Erdsonde 1 hinab. Der Ringraum 33 ist horizontal durch die Einströmrohrinnenfläche 30 und die Ausströmrohraußenfläche 27 und vertikal durch den Verbindungsbereich 36 und das obere Ende 38 der Erdsonde 1 begrenzt. Im Bereich des oberen Endes 38 geht der Zulauf 2 fluidleitend in den Ringraum 33 über, in dem Verbindungsbereich 36 geht der Ringraum 33 tluidleitend in einen Ausströmrohrraum 34 über. Der Ausströmrohrraum 34 ist horizontal durch die Ausströmrohrinnenfläche 26 und vertikal durch den Verbindungsbereich 36 und den Ablauf 15 begrenzt, in den der Ausströminnenraum 34 fluidleitend mündet.

An einem oberen Ende 38 ist an dem Sondenaußenrohr 9 ein Anschlussdeckel 3 angeordnet. Darein wird der Zulauf 2 fluidleitend mit dem Ringraum 33 und der Ablauf 15 fluidleitend mit dem Ausströmrohrraum 34 verbunden wird. Der Anschlussdecke 31 bildet die Schnittstelle zwischen dem Teil der Erdsonde 1, der in dem Erdreich 25 steckt und dem Teil, der von außen zugänglich sein muss. Vorteilhafterweise weisen sowohl der Zulauf 2 als auch der Ablauf 15 Mittel zur Befestigung von Leitungen für Wärmeübertragungsflüssigkeit auf. In einer sehr einfachen Ausgestaltung ist der Anschlussdeckel 3 auf das Sondenaußenrohr 9 gesteckt und abgedichtet. Der Anschlussdeckel weist eine Heizwendel 12 auf, die aus einem elektrischen Leiter gebildet wird. Über Anschlüsse 5 kann ein Strom durch die Heizwendel 5 geleitet werden, um die Heizwendel zu erhitzen.

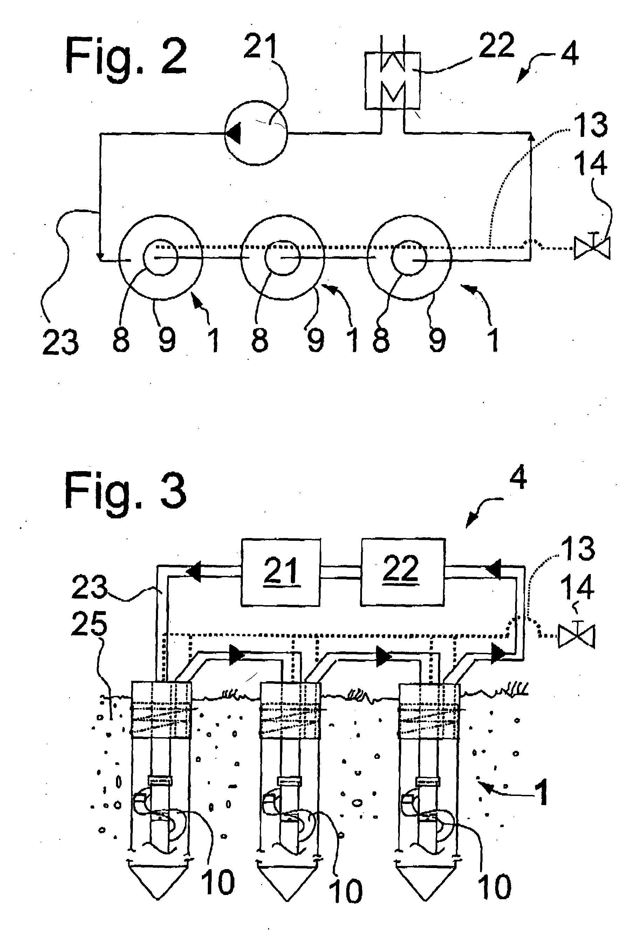

Die Erdsonde 1 ist im Betriebszustand im Erdreich 25 angeordnet. Die Erdsonde 1 ist z.B. 15 m bis 25 m tief in dem Erdreich 25 angeordnet. Die Erdsonde 1 weist eine Länge L auf, die entsprechend der erwünschten Tiefe zwischen 15m und 25 m variiert. Die Wärmeübertragungsflüssigkeit nimmt während des Durchströmens des Ringraumes 33 eine Wärmeleistung aus dem Erdreich 25 auf. Das Sondenaußenrohr 9 ist dazu vorteilhafterweise aus einem Material gefertigt, welches eine verhältnismäßig hohen Wärmeübertragungskoeffizienten aufweist. Beispielsweise kann Highdensity-Polyethylen, kurz PE-HD verwendet werden. Die Wärmeübertragungsflüssigkeit steigt anschließend innerhalb des Sondeninnenrohres 8 wieder empor und strömt an dem Ablauf 15 aus der Erdsonde 1 hinaus in Leitungen 23, die in Figur 2 noch beschrieben werden.

In einem unteren Ende 38 der Erdsonde 1 ist ein Sondenfuss 19 angeordnet, der konisch spitz zuläuft. Der Sondenfuss 19 läuft von der Erdsonde 1 wegweisend konisch spitz zu erleichtert das Eindringen der Erdsonde 1 in eine Bohrung. Der Sondenfuss 19 kann mittels eines thermischen Schweißverfahrens, beispielsweise Stumpfscheißen, mit dem Sondenaußenrohr 9 verbunden werden.

Der Ausströmrohrraum 34 ist im Wesentlichen glatt gestaltet. Im Ringraum 33 außerhalb des Sondeninnenrohres 8, also innerhalb dem Sondenaußenrohr 9, ist ein Mittel zur Verwirbelung der Wärmeübertragungsflüssigkeit angeordnet.

Nach einer Unterbrechung können die Mittel zur Verwirbelung der Wärmeübertragungsflüssigkeit abschnittsweise wiederholt auftreten. Die Mittel zur Verwirbelung der Wärmeübertragungsflüssigkeit umfassen Verwirbelungsflügel 10, welche hellxartig um das Sondeninnenrohr 8 geschwungen sind. Sie können sich über nahezu die gesamte Länge des Sondeninnenrohres 8 erstrecken, sie können jedoch auch nur bereichsweise angeordnet sein. Über eine Manschette 11 kann ein Verwirbelungsflügel 10 mit dem Sondeninnenrohr 8 verbunden werden. Zur Arretierung der Manschette 11 dient eine Bohrung 7 mit einem Innengewinde. Durch diese Bohrung 7 mit Innengewinde kann eine Madenschraube eingesetzt werden.

Vorteilhafterweise weisen die Verwirbelungsflügel 10 sich von diesen weg erstreckende Stopper 6 auf. Die Stopper 6 dienen zur zusätzlichen Verwirbelung der Wärmeübertragungsflüssigkeit.

Das Sondenaußenrohr 9 weist üblicherweise eine wandstärke wa zwischen 2,5 mm und 5 mm auf. Vorzugsweise weist es eine Wandstärke wa von 3,2 mm bis 3,8 mm auf. Der innere Durchmesser des Sondenaußenrohres 9 beträgt vorzugsweise 100 mm bis 180 mm. Der innere Durchmesser di des Sondeninnenrohres 8 liegt vorteilhaft zwischen 20 mm und 50 mm. Das Verhältnis des Durchmessers di des Sondeninnenrohres 8 zu dem Durchmesser da des Sondenaußenrohres 9 liegt also In einem Bereich zwischen 0,2 und 0,7, vorteilhaft in einem Bereich zwischen 0,25 und 0,35. Dadurch wird erreicht, dass der Ringraum 33 eine verhältnismäßig große Fläche aufweist und sich die Wärmeübertragungsflüssigkeit darin möglichst langsam bewegt. Gleichzeitig ist noch gewährleistet, dass der Durchmesser di des Sondeninnenrohres 8 nicht zu klein ist und sich hier kein zu großer Rohrwiderstand ausbildet.

Das Verfahren zur Bereitstellung einer Erdsonde 1 für den Betrieb umfasst Schritte, die im Folgenden aufgelistet werden: Bohren eines Loches von 15 Metern bis 20 Metern an einer gewünschten Stelle in Erdreich 25, Einsetzen des Sondenaußenrohres 9 mit dem unteren Ende 39 bzw. dem daran angeordneten Sondenfuss 19 zuerst, Einführen des Sondeninnenrohres 8 mit den daran angeordneten Verwirbelungsflügeln 10, Anordnung eines Anschlussdeckels 3 auf dem Sondeninnenrohr 8, wobei das Sondeninnenrohr 8 an seinem oberen Ende mit einer Muffe 4, die an einem sich durch den Anschlussdeckel 3 erstreckenden Innenrohrabschnitt 29 angeordnet ist, fluidleitend verbunden wird, Aufsetzen des Anschlussdeckels 3 auf das Sondenaußenrohr 9, Aufheizen von in dem Anschlusskopf angeordneten Heizwendeln 12 mittels eines elektrischen Stromes, der durch die Anschlüsse 5 an die Heizwendeln abgegeben werden kann, thermisches Verschweißen des Anschlusskopfes 3 mit dem Sondenaußenrohr 9.

Das in Figur 1 in der Mitte um die Längsachse 17 angeordnete Sondeninnenrohr 8 wird also an einer Muffe 4 mit einem Innenrohrabschnitt 29 verbunden. Der Anschlussdeckel 3 weist einen Steckbereich 18 auf, der so zu dem Sondenaußenrohr passt, dass.die Bauteile Anschlussdeckel 3 und Sondenaußenrohr 9 eine Verbindung eingehen können. Die Verbindung sollte dabei zumindest gegenüber Luft und der Wärmeübertragungsflüssigkeit abgedichtet sein.

Die Erdsondc 1 kann nun mit Wärmeübertragungsflüssigkeit befüllt werden. Dazu füllt man das Sondenaußenrohr 9 mit Wärmeübertragungsflüssigkeit auf. Auch nachdem das Sondenaußenrohr 9 befüllt wurde, bleiben an Ecken und Kanten innerhalb der Erdsonde 1, insbesondere an den Mitteln zur Verwirbelung der Wärmeübertragungsflüssigkeit Luftblasen hängen, die erst während des Betriebes der Erdsonde 1 abgelöst werden und emporsteigen. Auch in der Wärmeübertragungsflüssigkeit gelöste Luft und andere Gase können emporsteigen. Insgesamt sammelt sich Luft im Anschlussdeckel 3. In dem Sondeninnenrohr 8 kann sich im oberen Bereich ebenfalls Luft ansammeln.

In einer Erdsonde 1 befindliche Luft beeinträchtigt die Funktion der Erdsonde 1. Der zur Förderung der Wärmeübertragungsflüssigkeit notwendige Druckunterschied zur Durchströmung der Erdsonde 1 mit Wärmeübertragungsflüssigkeit wird zu groß. Deshalb müssen die Erdsonden 1 regelmäßig, insbesondere jedoch bei der Inbetriebnahme entlüftet werden.

Um die Erdsonde 1 entlüften zu können, weist die des erfindungsgemäßen Erdkreislaufs Erdsonde 1 eine Entlüftung 37 auf. Diese umfasst eine Entlüftungsöffnung 16, eine Entlüftungsleitung 13 und ein Entlüftungsventil 14. Die Entlüftungsöffnung 16 ist vorteilhaft an einer möglichst weit oben gelegenen Stelle des Anschlussdeckels 3 angeordnet. Die Entlüftungsöffnung 16 schließt an mit der Entlüftungsleitung 13. Am anderen Ende der Entlüftungsleitung 13 ist ein Entlüftungsventil 14 angeordnet, beispielsweise ein Kugelhahn. Zur Entlüftung der Erdsonde 1 wird die Wärmeübertragungsflüssigkeit unter Druck gesetzt und das Entlüftungsventil 14 geöffnet. Wie die Wärmeübertragungsflüssigkeit unter Druck gesetzt werden kann, wird in den Figurenbeschreibung zu Figur 2 noch erläutert. Die unter Druck gesetzte Wärmeübertragungsflüssigkeit verdrängt bei geöffnetem Entlüftungsventil 14 die Luft entgegen der Schwerkraft.

Als Wärmeübertragungsflüssigkeit eignet sich Wasser. Damit das Wasser nicht in der Erdsonde 1 gefrieren kann, wird üblicherweise ein Frostschutzmittel zugesetzt.

Das Sondeninnenrohr 8 und das Sondenaußenrohr 9 können mehrteilig angeliefert und vor Ort zusammengefügt werden. Thermoplastische Kunststoffe eignen sich hierzu, da sie leicht schmelzbar sind und gleichzeitig eine hohe Witterungsbeständigkeit aufweisen.

Figur 2 zeigt in der Draufsicht eine schematische Darstellung dreier Erdsonden 1 mit Leitungen 23, die zur Realisierung eines Erdsondenwärmekreislaufes 4 züsammengeschaltet sind. Dargestellt ist ein geschlossener Erdsondenwärmekreislauf 4, in dem die Wärmeübertragungsflüssigkeit zunächst mit einer Pumpe 21 auf ein höheres Druckniveau gebracht wird. Alsdann wird die Wärmeübertragungsflüssigkeit einer ersten Erdsonde 1 zugeführt, die in Figur 2 links angeordnet ist. Die Wärmeübertragungsflüssigkeit wird dabei in den Ringraum 33 geleitet. Hierin strömt die Wärmeübertragungsflüssigkeit bis in den Verbindungsbereich 36 und durch das Sondeninnenrohr 8 aus der Tiefe empor und gelangt in die mittlere Erdsonde 1. Danach wird die Wärmeübertragungsflüssigkeit von der mittleren Erdsonde 1 in den Ringraum 33 der dritten Erdsonde 1 geleitet. Hat die Wärmeübertragungsflüssigkeit alle drei Erdsonden 1 passiert, so wird sie einem Wärmetauscher 22 zugeführt.

Figur 3 zeigt eine Anordnung dreier Erdsonden 1 in der Reihenschaltung in einer Seitenansicht. Die Darstellung ist weniger schematisch, insbesondere sind die Leitungen 23 deutlicher als solche erkennbar.

Über die Entlüftungsleitung 13 können die drei Erdsonden 1 entlüftet werden. Dazu wird an dem von den Erdsonden 1 beabstandeten Ende der Entlüftungsleitung 13 das Entlüftungsventil 14 angeordnet. Vorteilhafterweise befindet sich das Ventil 14 innerhalb eines Wohnbereiches, von dem aus der Erdsondenwärmekreislauf 4 bedient wird. Es kann wahlweise auch in einer alternativen Ausgestaltung jeder Zulauf 2 bzw. jeder Ablauf 15 einzeln entlüftbar sein, indem entsprechend Entlüftungen 37 vorgesehen werden.

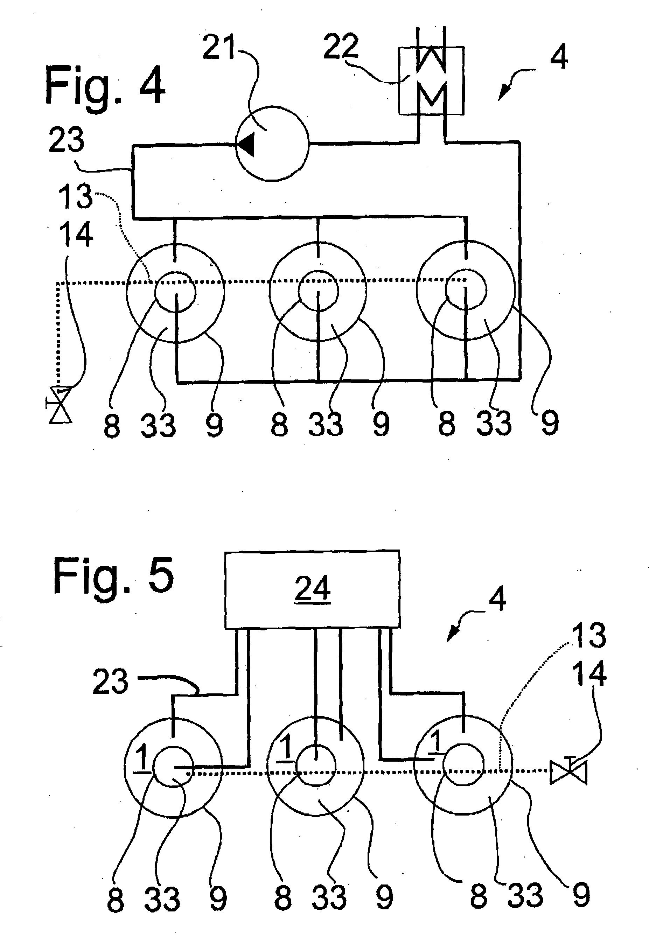

In Figur 4 ist eine schematische Darstellung einer nicht erfindungsgemäßen Parallelschaltung von Erdsonden 1. Die mittels der Pumpe 21 unter Druck gesetzte Wärmeübertragungsflüssigkeit wird in einer Leitung 23 den Erdsonden 1 gleichzeitig zugeführt. Die Leitungen 23 sind dabei so angeschlossen, dass die unter Druck gesetzte Wärmeflüssigkeit in den Ringraume 33 eingeleitet wird. Abgeleitet wird die Wärmeübertragungsflüssigkeit aus den Abläufen 15. Die Wärmeübertragungsflüssigkeit passiert danach den Wärmetauscher 22. Vorteilhaft an der in Figur 4 dargestellten Parallelschaltung ist der gegenüber der Reihenschaltung geringere Strömungswiderstand, der von der Pumpe 21 überwunden werden muss.

Eine nicht erfindungsgemäße Anordnung von Erdsonden ist in Figur 5 dargestellt. Hier führen die Leitungen 23 jeder Erdsonde 1 in eine Verteilerbatterie 24. Der Verteilerbatterie 24 fällt die Aufgabe der Verteilung von Wärmeübertragungsflüssigkeit an die Erdsonden 1 zu. Hier kann die Wärmeübertragungsflüssigkeit wahlweise nach Art der Parallelschaltung oder nach Art einer Reihenschaltung oder Kombinationen hieraus durch die Erdsonden 1 geleitet werden. Die Verteilerbatterie 24 kann bedarfsweise Leitungen 23 zu- und abschalten. Beispielsweise kann es in wärmeren Monaten ausreichen, nur eine Erdsonde 1 zu verwenden.

### Bezugszeichenliste

- 1.: Erdsonde
- 2.: Zulauf
- 3.: Anschlussdeckel
- 4.: Erdsondenwärmekreislauf
- 5.: Anschlusskontakt
- 6.: Stopper
- 7.: Bohrung
- 8.: Sondeninnenrohr
- 9.: Sondenaußenrohr
- 10.: Verwirbelungsflügel
- 11.: Manschette
- 12.: Heizwendeln
- 13.: Entlüftungsleitung
- 14.: Entlüftungsventil
- 15.: Ablauf
- 16.: Entlüftungsöffnung
- 17.: Längsachse
- 18.: Steckbereich
- 19.: Sondenfuss
- 21.: Pumpe
- 22.: Wärmetauscher
- 23.: Leitungen
- 24.: Verteilerbatterie
- 25.: Erdreich
- 26.: Ausströmrohrinnenfläche
- 27.: Innenrohraußenfläche
- 28.: Isolierung
- 29.: Rohrabschnitt
- 30.: Einströmrohrinnenfläche
- 31.: Einströmrohraußenfläche
- 33.: Ringraum
- 34.: Ausströmrohrraum
- 35.: Muffe
- 36.: Verbindungsbereich
- 37.: Entlüftung
- 38.: oberes Ende
- 39.: unteres Ende

## Patentansprüche

1. Erdsondenwärmekreislauf, aufweisend mindestens zwei Erdsonden (1) zum Austausch von Wärme zwischen einer Wärmeübertragungsflüssigkeit und Erdreich (25), in dem die Erdsonden (1) im Betriebszustand angeordnet ist, jeweils mit
a) einem Einströmrohr, das eine in das Einströmrohr weisende Einströmrohrinnenfläche (30) und eine dem Erdreich (25) zugewandte Einströmrohraußenfläche (31) aufweist,
b) einem Ausströmrohr, das eine in das Ausströmrohr weisende Ausströmrohrinnenfläche (26), die einen Ausströmrohrraum (34) einschließt, und eine außen von dem Ausströmrohr weg weisende Ausströmrohraußenfläche (27) aufweist,
c) einem innerhalb des Einströmrohres befindlichen Ringraum (33), der horizontal durch die Einströmrohrinnenfläche (30) und die Ausströmrohraußenfläche (27) begrenzt ist,
d) einem den Ringraum (33) und den Ausströmrohrraum (34) fluidleitend verbindenden Verbindungsbereich (36), der an einem unteren Ende (39) der Erdsonde (1) angeordnet ist,
e) einem mit dem Ringraum (33) fluidleitend verbundenen Zulauf (2), der an einem oberen Ende (38) der Erdsonde (1) angeordnet ist, und
f) einem mit dem Ausströmrohrraum (34) fluidleitend verbunden Ablauf (15), der ebenfalls an einem oberen Ende der Erdsonde (1) angeordnet ist,
g) mindestens einem Mittel zur Verwirbelung der Wärmeübertragungsflüssigkeit, das in dem Ringraum (33) vorgesehen ist,
h) einem Anschlussdeckel (3), in dem die fluidleitende Verbindung zwischen dem Zulauf (2) und dem Ringraum (33) und zwischen dem Ablauf (15) und dem Ausströmrohrraum (34) angeordnet ist, der eine Entlüftungsöffnung (16) aufweist,
i) einer Entlüftungsleitung (13), die an die Entlüftungsöffnung (16) der Erdsonde (1) anschließt und ein von der Erdsonde (1) beabstandetes Entlüftungsventil (14) umfasst, über die die Ringräume (33) der Erdsonde (1) entlüftet werden können,
wobei die Erdsonden (1) in dem Erdwärmekreislauf in Reihe geschaltet sind und eine Wärmeübertragungsflüssigkeit durch die Einströmrohre und Ausströmrohre geleitet werden kann und sich dabei der Wärmeaustausch jeweils zwischen der Wärmeübertragungsflüssigkeit und dem Erdreich (25) zumindest durch das Einströmrohr hindurch vollzieht, wobei
das Mittel zur Verwirbelung der Wärmeübertragungsflüssigkeit aus zumindest einem Verwirbelungsflügel (10) gebildet ist, der an einer nach Art eines zylindrischen Rohrabschnittes ausgebildeten Manschette (11) angebracht ist, die an einer nach innen weisenden Fläche zu der Form des Ausströmrohres korrespondiert, auf diesem für die Montage verschiebbar angeordnet ist, um das Mittel zur Verwirbelung der Wärmeübertragungsflüssigkeit entlang dem Sondeninnenrohr zu positionieren und in dem Ringraum (33) verrutschsicher angeordnet werden kann.

2. Erdsondenwärmekreislauf nach Anspruch 1, **dadurch gekennzeichnet, dass** das Ausströmrohr eine Isolierung (28) aufweist, welche die in dem Ausströmrohrraum (34) befindliche Wärmeübertragungsflüssigkeit von der im Ringraum (33) befindlichen Wärmeübertragungsflüssigkeit thermisch isoliert.

## Claims

1. A borehole heat exchanger cycle, comprising at least two borehole heat exchangers (1) for exchanging heat between a heat transfer liquid and ground soil (25) in which the borehole heat exchangers (1) are disposed in the operating condition, each with
a) an inflow pipe having an inner surface (30) of the inflow pipe facing into the inflow pipe and an outer surface (31) of the inflow pipe facing towards the ground soil (25),
b) an outflow pipe comprising an inner surface (26) of the outflow pipe, which faces into the outflow pipe and encloses an outflow pipe chamber (34), and an outer surface (27) of the outflow pipe pointing outwards away from the outflow pipe,
c) an annular chamber (33), which is located within the inflow pipe and is horizontally delimited by the inner surface (30) of the inflow pipe and the outer surface (27) of the outflow pipe,
d) a connecting portion (36), which interconnects the annular chamber (33) and the outflow pipe chamber (34) in a fluid-conducting manner and is disposed at a lower end (39) of the borehole heat exchanger (1),
e) a feed pipe (2), which is connected to the annular chamber (33) in a fluid-conducting manner and is disposed at an upper end (38) of the borehole heat exchanger (1), and
f) a drain pipe (15), which is connected in a fluid-conducting manner to the outflow pipe chamber (34) and is also disposed at an upper end of the borehole heat exchanger (1),
g) at least one means for producing turbulence in the heat transfer liquid, which is provided in the annular chamber (33),
h) a connector cover (3) in which the fluid-conducting connection between the feed pipe (2) and the annular chamber (33) and between the drain pipe (15) and the outflow pipe chamber (34) is disposed, which has a vent opening (16),
i) a vent pipe (13) connected to the vent opening (16) of the borehole heat exchanger (1) and comprising a vent valve (14) spaced apart from the borehole heat exchanger (1), via which the annular chambers (33) of the borehole heat exchanger (1) can be vented,
wherein the borehole heat exchangers (1) in the borehole heat cycle are connected in series, and a heat transfer liquid can be conducted through the inflow pipes and the outflow pipes, and, in the process, the heat transfer takes place in each case between the heat transfer liquid and the ground soil (25) at least through the inflow pipe,
wherein the means for producing turbulence in the heat transfer liquid is formed from at least one turbulence-producing blade (10) attached to a collar (11) which is formed like a cylindrical pipe section and which, on a surface facing inside, corresponds to the shape of the outflow pipe, is disposed thereon in a displaceable manner for mounting in order to position the means for producing turbulence in the heat transfer liquid along the inner pipe of the borehole heat exchanger, and can be disposed in a slip-proof manner in the annular chamber (33).

2. The borehole heat exchanger cycle according to claim 1, **characterised in that** the outflow pipe has an insulation (28) which thermally insulates the heat transfer liquid located in the outflow pipe chamber (34) against the heat transfer liquid located in the annular chamber (33).

## Revendications

1. Circuit thermique à sonde géothermique, comprenant au moins deux sondes géothermiques (1) pour échanger de la chaleur entre un fluide de transfert thermique et la terre (25) dans laquelle les sondes géothermiques (1) sont disposées en état de fonctionnement, comprenant respectivement
a) un tuyau d'admission qui présente une surface intérieure de tuyau d'admission (30) montrant dans ledit tuyau d'admission ainsi qu'une surface extérieure de tuyau d'admission (31) tournée vers la terre (25),
b) un tuyau d'échappement qui présente une surface intérieure de tuyau d'échappement (26) montrant dans ledit tuyau d'échappement et entourant un espace de tuyau d'échappement (34), ainsi qu'une surface extérieure de tuyau d'échappement (27) qui, à l'extérieur, montre dans la direction opposée au tuyau d'échappement,
c) un espace annulaire (33) qui est situé à l'intérieur dudit tuyau d'admission et qui est limité horizontalement par ladite surface intérieure de tuyau d'admission (30) et ladite surface extérieure de tuyau d'échappement (27),
d) une zone de liaison (36) qui met en communication fluidique ledit espace annulaire (33) et ledit espace de tuyau d'échappement (34) et qui est disposée à une extrémité inférieure (39) de la sonde géothermique (1),
e) un point d'amenée (2) qui est en communication fluidique avec l'espace annulaire (33) et qui est disposé à une extrémité supérieure (38) de la sonde géothermique (1), et
f) un point d'évacuation (15) qui est en communication fluidique avec ledit espace de tuyau d'échappement (34) et qui est disposé également à une extrémité supérieure de la sonde géothermique (1),
g) au moins un moyen de tourbillonnement du fluide de transfert thermique, qui est prévu dans ledit espace annulaire (33),
h) un couvercle de raccordement (3) dans lequel est disposée la liaison fluidique entre ledit point d'amenée (2) et ledit espace annulaire (33) ainsi qu'entre ledit point d'évacuation (15) et ledit espace de tuyau d'échappement (34), et qui présente un évent (16),
i) une conduite de purge (13) qui est raccordée audit évent (16) de la sonde géothermique (1) et qui comprend une soupape de purge (14) qui est espacée de la sonde géothermique (1) et par laquelle les espaces annulaires (33) de la sonde géothermique (1) peuvent être purgés,
dans lequel les sondes géothermiques (1) sont montées en série dans le circuit d'énergie géothermique et un fluide de transfert thermique peut être conduit à travers les tuyaux d'admission et les tuyaux d'échappement et, ce faisant, l'échange de chaleur se produit respectivement entre le fluide de transfert thermique et la terre (25) au moins à travers le tuyau d'admission,
dans lequel ledit moyen de tourbillonnement du fluide de transfert thermique est formé d'au moins une pale de tourbillonnement (10) qui est montée sur un manchon (11) réalisé à la manière d'un tronçon de tuyau cylindrique qui, sur une surface montrant vers l'intérieur, correspond à la forme du tuyau d'échappement, est disposé à coulissement sur celui-ci pour le montage afin de positionner le moyen de tourbillonnement du fluide de transfert thermique le long du tuyau intérieur de sonde, et peut être disposé d'une manière antidérapante dans ledit espace annulaire (33).

2. Circuit thermique à sonde géothermique selon la revendication 1, **caractérisé par le fait que** le tuyau d'échappement présente une isolation (28) qui isole thermiquement le fluide de transfert thermique se trouvant dans ledit espace de tuyau d'échappement (34), du fluide de transfert thermique se trouvant dans ledit espace annulaire (33).
